# EUROPÄISCHE PATENTSCHRIFT

(11) **EP 2 820 371 B1**
(45) Veröffentlichungstag und Bekanntmachung des Hinweises auf die Patenterteilung: **07.11.2018**
(21) Anmeldenummer: 13713347.6
(22) Anmeldetag: 28.02.2013
(51) Int. Cl.: F41G 3/22, B60K 35/00, B60K 37/00, F41H 7/02, F41G 5/24, F41G 9/00, F41G 3/16

(54) **MILITÄRISCHES FAHRZEUG UND INTEGRIERENDES IT-SYSTEM FÜR EIN MILITÄRISCHES FAHRZEUG**
MILITARY VEHICLE AND INTEGRATING IT SYSTEM FOR A MILITARY VEHICLE
VÉHICULE MILITAIRE ET SYSTÈME TI INTÉGRÉ POUR UN VÉHICULE MILITAIRE

(30) Priorität: 29.02.2012 DE 102012101654
(43) Veröffentlichungstag der Anmeldung: 07.01.2015
(73) Patentinhaber: Krauss-Maffei Wegmann GmbH & Co. KG, 80997 München (DE)
(72) Erfinder: LESSMANN, Markus, 80997 München (DE); GUTBERLET, Volker, 80997 München (DE); MAY, Alexander, 80997 München (DE)
(74) Vertreter: Feder Walter Ebert
(86) Internationale Anmeldenummer: PCT/DE2013/100078
(87) Internationale Veröffentlichungsnummer: WO 2013/127397

(56) Entgegenhaltungen:
- WO-A1-2011/070478
- US-A- 5 781 437
- US-A1- 2009 290 019

## Beschreibung

Die Erfindung betrifft ein militärisches Fahrzeug mit einer fernbedienbaren Waffe und mit einem Führungsinformationssystem zum Empfangen und/oder Senden militärischer Führungsdaten sowie ein IT-System für ein militärisches Fahrzeug.

Ferner kann das Fahrzeug weitere Subsysteme wie Effektoren, beispielsweise Störsender, und Sensoren, wie ein Aufklärungssystem, aufweisen. Militärische Fahrzeuge mit fernbedienbaren Waffen sind beispielweise aus der Druckschriften US 5 781 437 A, US 2009/290019 A1 und WO 2011/070478 A1 bekannt.

Derartige militärische Fahrzeuge sind oftmals als gepanzerte Rad- oder Kettenfahrzeuge ausgebildet. Zum Schutz gegen feindliche Bedrohungen weisen solche Fahrzeuge eine fernbedienbare Waffe, beispielsweise ein Maschinengewehr, auf. Die Waffe kann Teil einer fernbedienbaren Waffenstation sein. Die Waffe ist üblicherweise an der Außenkontur des Fahrzeugs angeordnet und kann aus dem Inneren des Fahrzeugs fernbedient werden. Hierzu kann in einem geschützten Innenraum des Fahrzeugs eine Bedienvorrichtung vorgesehen sein, über welche ein Besatzungsmitglied des Fahrzeugs die Waffe richten und betätigen kann.

Solche Fahrzeuge weisen zudem oftmals ein Führungsinformationssystem auf, welches das Empfangen und Senden militärischer Führungsdaten gestattet. Typische militärische Führungsdaten sind Einsatzpläne, Befehle, Aufklärungsdaten, Zielkoordinaten und Lagedaten. Die Führungsdaten können in dem Führungsinformationssystem in Form von Textdaten, Sprachdaten oder als Datenbankobjekte vorliegen und können über eine drahtlose Kommunikationsverbindung empfangen und/oder gesendet werden.

Innerhalb des Fahrzeugs kann ein Arbeitsplatz eines Besatzungsmitglieds, beispielsweise des Kommandanten des Fahrzeugs, vorgesehen sein, der eine Bedienvorrichtung für das Führungsinformationssystem aufweist und an welchem dem Besatzungsmitglied Führungsdaten angezeigt werden können. Die Führungsdaten können z. B. in Form einer militärischen Lagekarte angezeigt werden, in welcher Lagedaten grafisch dargestellt sind.

Derartige Fahrzeuge mit einer fernbedienbaren Waffe und einem Führungsinformationssystemen haben sich im Einsatz bewährt, da sie einen effektiven Umgang mit Führungsdaten erlauben und gleichzeitig Schutz durch eine Waffe bieten. Allerdings hat es sich bei derartigen militärischen Fahrzeugen als nachteilig herausgestellt, dass zur Bedienung der Waffe, des Führungsinformationssystems und ggf. der zusätzlich verbauten, rüstsatzspezifischen Subsysteme mehrere Bedienvorrichtungen erforderlich sind, welche jeweils entweder mit der Waffe oder dem Führungsinformationssystem oder den Subsystemen verbunden sind. Aus Sicherheitserwägungen ist es bislang nicht möglich, eine Waffe durch eine andere als die zur Waffe gehörige und für die Waffe zertifizierte Bedienvorrichtung zu bedienen. Es ist daher erforderlich, die Waffe, das Führungsinformationssystemund und ggf. die rüstsatzspezifischen Subsysteme durch zwei oder mehr verschiedene Besatzungsmitglieder, beispielsweise den Schützen und den Kommandanten des Fahrzeugs, zu bedienen. Die Besatzungsmitglieder müssen bei der Bedienung der Waffe und des Führungsinformationssystems Aufklärungs- und Führungsdaten untereinander austauschen, wobei oftmals Bedienfehler aufgrund lückenhafter oder mehrdeutiger Kommunikation auftreten können.

Ist nur ein Besatzungsmitglied zur Bedienung der Waffe sowie des Führungssystems verfügbar, so muss dieses Besatzungsmitglied zwischen den jeweiligen Bedienvorrichtungen hin- und herwechseln. Beim Wechsel zwischen den Bedienvorrichtungen der Waffe und des Führungsinformationssystems können Bedienfehler auftreten, z. B. dann, wenn das Führungsinformationssystem über die Bedienvorrichtung des Führungsinformationssystems bedient wird, um Führungsdaten zu empfangen, welche dann über die Waffen-Bedienvorrichtung an die Waffe übermittelt werden.

Vor diesem Hintergrund stellt sich die Erfindung die **Aufgabe,** die Anfälligkeit für Bedienfehler bei der Bedienung der Waffe und des Führungsinformationssystems zu verringern. Diese Aufgabe wird durch das militärische Fahrzeug sowie das IT-System gemäß den unabhängigen Ansprüchen gelöst. Vorteilhafte Ausgestaltungen sind Gegenstand der abhängigen Ansprüche.

Von einem derartigen Arbeitsplatz aus kann sowohl die fernbedienbare Waffe als auch das Führungsinformationssystem bedient werden. Mit einer gemeinsamen Bedienvorrichtung ist es nicht erforderlich, dass das Besatzungsmitglied zwischen verschiedenen Bedienvorrichtungen zur Bedienung der Waffe und des Führungsinformationssystems wechselt.

Ferner kann das Fahrzeug optional ein oder mehrere Subsysteme aufweisen, die vom Arbeitsplatz aus über die gemeinsame Bedienvorrichtung bedienbar sind.

Die Bedienbarkeit des Fahrzeugs wird daher gesteigert und die Anfälligkeit für Bedienfehler wird verringert. Dasselbe Besatzungsmitglied kann Führungsdaten über das Führungsinformationssystem empfangen und/oder senden und gleichzeitig die Waffe des Fahrzeugs bedienen. Ferner kann er auch Daten der Subsysteme, beispielsweise einer Schützendetektionsausstattung, verarbeiten. Insbesondere kann die Waffe über das Bediengerät in Azimut und Elevation gerichtet und ausgelöst werden.

Die gemeinsame Bedienvorrichtung kann derart ausgestaltet sein, dass sämtliche Funktionen der fernbedienbaren Waffe und des Führungsinformationssystems gesteuert werden können, so dass keine weiteren Bedienvorrichtungen zur Bedienung der Waffe oder des Führungsinformationssystems in dem Fahrzeug erforderlich sind. Die Bedienvorrichtung kann ferner derart ausgestaltet sein, dass auch ein oder mehrere Subsystems gesteuert werden können, so dass für diese keine separaten Bedienvorrichtungen erforderlich sind.

Gemäß der Erfindung sind in dem militärischen Fahrzeug mehrere Arbeitsplätze, insbesondere für einen Kommandanten, einen Schützen und/oder den Fahrer, vorgesehen, wobei jeder Arbeitsplatz eine Bedienvorrichtung aufweist, über welche sowohl die Waffe als auch das Führungsinformationssystem sowie gegebenenfalls ein oder mehrere Subsysteme bedienbar sind. Bei einem derartigen Fahrzeug können die Waffe und das Führungsinformationssystem von mehreren Arbeitsplätzen aus durch verschiedene Besatzungsmitglieder bedient werden. Es ist daher beispielsweise möglich, dass der Kommandant Tätigkeiten übernimmt, die üblicherweise dem Schützen zugewiesen sind und umgekehrt.

Besonders vorteilhaft ist es, wenn jeder Bedienvorrichtung eine Anzeigevorrichtung zugeordnet ist, wobei auf der Anzeigevorrichtung Daten des Führungsinformationssystems, der Waffe und/oder gegebenenfalls von dem oder den Subsystemen anzeigbar sind. Dies bringt den Vorteil mit sich, dass jeweils nur eine Anzeigevorrichtung zur Anzeige sowohl der Daten der Waffe als auch der Daten des Führungsinformationssystems als auch gegebenenfalls von dem oder den Subsystemen erforderlich ist. Es können beispielsweise Statusinformationen der Waffe wie etwa die momentane Ausrichtung der Waffe in Elevation und Azimut auf der Anzeigevorrichtung angezeigt werden. Ferner ist es möglich, Führungsdaten auf der Anzeigevorrichtung abzubilden. Des Weiteren können Sensordaten oder Effektordaten der Subsysteme anzeigbar sein.

Bei einem Fahrzeug mit mehreren Arbeitsplätzen können die Daten der Waffe und des Führungsinformationssystems sowie gegebenenfalls von dem oder den Subsystemen über mehrere Arbeitsplätze verteilt werden. Hierdurch wird es möglich, dass verschiedene Besatzungsmitglieder parallel Zugriff auf die Daten der Waffe und des Führungsinformationssystems und/oder gegebenenfalls von dem oder den Subsystemen haben. Die Anzeige der Daten von Waffe und Führungsinformationssystem und/oder gegebenenfalls von dem oder den Subsystemen kann bevorzugt gleichzeitig erfolgen, so dass das Besatzungsmitglied parallel sowohl mit der Waffe als auch dem Führungsinformationssystem sowie gegebenenfalls mit dem oder den Subsystemen interagieren kann.

Ein mögliches Subsystem ist eine Aufklärungsvorrichtung. Zur Erfassung der Umgebung können derartige militärische Fahrzeuge eine Aufklärungsvorrichtung zur Erfassung von Aufklärungsdaten aufweisen. In diesem Zusammenhang ist es bevorzugt, wenn die Aufklärungsdaten auf der Anzeigevorrichtung darstellbar sind, so dass das Besatzungsmitglied an der jeweiligen Anzeigevorrichtung die Aufklärungsdaten sehen kann. Bei einem Fahrzeug mit mehreren Arbeitsplätzen können die Aufklärungsdaten auf jeder Anzeigevorrichtung des Fahrzeugs darstellbar sein, so dass mehrere Besatzungsmitglieder über unterschiedliche Anzeigevorrichtungen dieselben Aufklärungsdaten betrachten können. Die Aufklärungsvorrichtung kann insbesondere als Kamera, als Nachtsichtgerät, als Ultraschall- oder IR-Sensor, RADAR-Gerät, Laserscanner o. ä. ausgebildet sein. Über die Aufklärungsvorrichtung können insbesondere Bilddaten von Standbildern und/oder bewegten Bildern erfasst werden. In vorteilhafter Weise können alle Besatzungsmitglieder in die Lage versetzt werden, gleichzeitig auf alle Videodaten sowie auf alle Aufklärungsdaten zuzugreifen.

Besonders bevorzugt ist die Aufklärungsvorrichtung über die Bedienvorrichtung steuerbar, so dass ein Besatzungsmitglied mit der Aufklärungsvorrichtung interagieren kann. Über die Bedienvorrichtung kann das Aufklärungsgerät beispielsweise ausgerichtet werden.

In diesem Zusammenhang hat es sich als besonders vorteilhaft herausgestellt, wenn die Aufklärungsvorrichtung mit der Waffe richtbar ist, so dass die Aufklärungsvorrichtung zusammen mit der Waffe über die Bedienvorrichtung gerichtet werden kann. Hierdurch kann sichergestellt werden, dass der Bereich der Umgebung, welcher durch die Aufklärungsvorrichtung aufgeklärt wird, stets der Ausrichtung der Waffe entspricht.

Im Hinblick auf den Austausch von Daten zwischen mehreren Bedienvorrichtungen eines Fahrzeugs sowie der Waffe und dem Führungsinformationssystem sowie gegebenenfalls dem oder den Subsystemen sind die Bedienvorrichtungen sowie die Waffe und das Führungsinformationssystem sowie gegebenenfalls das oder die Subsysteme über ein Netzwerk miteinander verbunden, welches mehrere Netzwerkknoten aufweist. Über das Netzwerk können Daten wahlweise zwischen den einzelnen angeschlossenen Bedienvorrichtungen, der Waffe und dem Führungsinformationssystem sowie gegebenenfalls dem oder den Subsystemen ausgetauscht werden. Das Netzwerk dient somit auch zum Austauschen und/oder Verteilen der Daten zwischen den Netzwerkknoten. Die an die Netzwerkknoten angeschlossenen Anzeige- und Bedienvorrichtungen können zur Modifikation und/oder Visualisierung der Daten dienen.

Bei dem Netzwerk handelt es sich bevorzugt um ein integrierendes Netzwerk. Das Netzwerk ist bevorzugt redundant.

Das Netzwerk (Backbone) kann als Ethernet-Netzwerk ausgebildet sein, welches mit einem vorgegeben Protokoll, beispielsweise TCP/IP und/oder adaptiertem Softwarebus (Data Distribution Service), betrieben wird. Die Netzwerkknoten können als Computer ausgebildet sein, die vorteilhafterweise derart ausgebildet sind, dass sie bei den vergleichsweise rauen Bedingungen in einem militärischen Fahrzeug betrieben werden können.

Besonders vorteilhaft ist es, wenn ein Netzwerkknoten jeweils mit einer Anzeigevorrichtung und/oder einer Bedienvorrichtung eines Arbeitsplatzes verbunden ist, so dass es nicht erforderlich ist, weitere Geräte zur Anbindung der Anzeigevorrichtung und/oder der Bedienvorrichtung an das Netzwerk zu verwenden. Die Anzeigevorrichtung und/oder die Bedienvorrichtung können direkt an dem Netzwerkknoten angebunden sein. Die Anbindung der Anzeigevorrichtung und/oder der Bedienvorrichtung kann über eine Schnittstelle erfolgen, die insbesondere als USB, VGA, HDMI oder DVI-Schnittstelle ausgebildet ist. Des Weiteren können die Waffe, das Führungsinformationssystem, Bedienvorrichtungen und/oder das oder die Subsysteme an einen Netzwerkknoten angebunden sein. Die Anbindung kann über CAN, serielle Schnittstelle, USB, Digital IO oder Ethernet erfolgen.

Der Netzwerkknoten übernimmt die Adaption der angeschlossenen Elemente wie der Waffe, des Führungsinformationssystems, der Bedienvorrichtungen und/oder des oder der Subsysteme und stellt die Daten Netzwerk für die anderen Netzwerkknoten zur Verfügung. Dadurch, dass die Anpassung der angeschlossenen Elemente für das IT-System im Netzwerkknoten erfolgt, müssen die Elemente nicht besonders für das IT-System ausgelegt sein, es können vielmehr allgemein verfügbare Standard-Elemente, auch ältere bestehende Elemente, verwendet und nachgerüstet werden. Die Verantwortung für die Anpassung und auch die Sicherheit liegt somit beim IT-Systemhersteller.

Grundsätzlich kann das Netzwerk eine beliebige Netzwerk-Topologie aufweisen. Es hat sich aber als vorteilhaft herausgestellt, wenn das Netzwerk einen Bus zu Verteilung von Daten, insbesondere von Führungsdaten oder Bilddaten, aufweist, an dem die Netzwerkknoten angeschlossen sind. Aufgrund der Topologie, insbesondere der Bus-Topologie, kann das Netzwerk durch Hinzufügen weiterer Netzwerkknoten ohne großen Aufwand erweitert werden. Netzwerkknoten können entfernt werden, ohne die Funktionalität des Netzwerks zu beeinträchtigen. Somit kann ein militärisches Fahrzeug bereitgestellt werden, bei dem Komponenten nachgerüstet und auf einfache Weise an das Netzwerk des Fahrzeugs angeschlossen werden können.

Wenn es erforderlich ist, große Datenmengen, wie beispielsweise Bilddaten einer Bewegtbildquelle, wie z. B. einer Videokamera, über das Netzwerk zu übertragen kann das Netzwerk an seine Kapazitätsgrenze stoßen, so dass die Übertragung weiterer Daten, beispielsweise der Führungsdaten des Führungsinformationssystems, die hohe Relevanz für die Führung des Fahrzeugs haben, gestört oder vollständig verhindert wird. In diesem Zusammenhang ist es bevorzugt, wenn das Netzwerk mehrere Busse zur getrennten Verteilung verschiedener Daten aufweist, an denen die Netzwerkknoten angeschlossen sind. Bei einer derartigen Topologie, insbesondere Bus-Topologie, mit mehreren Bussen wird die gegenseitige Beeinflussung der Übertagung der verschiedenen Daten vermindert.

Alternativ kann das Netzwerk lediglich einen Bus aufweisen, wobei den über den Bus übertragenen Daten jeweils eine Priorität zugewiesen ist. Daten, denen eine hohe Priorität zugewiesen ist, können bevorzugt über den Bus übertragen werden, so dass eine Beeinflussung der Übertragung der Daten mit hoher Priorität durch Daten mit niedriger Priorität verringert wird.

Das reale physikalische Netzwerk kann in mehrere virtuelle Netzwerke unterschiedlicher Priorität aufgeteilt werden. Somit können Daten einer hohen Relevanz vorrangig behandelt werden.

Bevorzugt sind Führungsdaten und Bilddaten über getrennte Busse übertragbar, so dass große Mengen an Bilddaten über einen ersten insbesondere echtzeitfähigen Bus übertragen werden können und gleichzeitig Führungsdaten über einen zweiten Bus übertragen werden. Auf diese Weise kann verhindert werden, dass die zu Verfügung stehende Bandbreite für die Übertragung von Führungsdaten durch die Übertragung von Bilddaten reduziert wird.

Die Anbindung des Führungsinformationssystems kann über einen Netzwerkknoten erfolgen. Es hat sich aber als vorteilhaft erwiesen, wenn das Netzwerk einen Switch zur Anbindung des Führungsinformationssystems aufweist, so dass das Führungsinformationssystem unabhängig von den Netzwerkknoten an das Netzwerk angebunden werden kann. Bei der Übertragung von Daten zwischen dem Führungsinformationssystem und einer anderen Einheit des Netzwerks, beispielsweise einer Anzeigevorrichtung oder einer Bedienvorrichtung, können die Führungsdaten somit direkt von dem Führungsinformationssystem über den Switch in das Netzwerk eingespeist werden.

Die Aufklärungsvorrichtung kann ebenfalls über einen Netzwerkknoten an das Netzwerk angebunden sein. Es ist allerdings bevorzugt, wenn das Netzwerk einen Switch zur Anbindung der Aufklärungsvorrichtung aufweist, so dass die Aufklärungsdaten ohne einen Umweg über einen Netzwerkknoten direkt in das Netzwerk eingespeist werden können. Die Aufklärungsvorrichtung kann insbesondere als Kamera ausgebildet sein, so dass Bilddaten über den Switch in das Netzwerk geleitet werden können.

Hinsichtlich der Abläufe bei der Aufklärung von militärischen Zielen ist es bevorzugt, wenn die Aufklärungsdaten über das Netzwerk in das Führungsinformationssystem übertragbar sind, so dass Aufklärungsdaten aus dem militärischen Fahrzeug über das Führungsinformationssystem an andere militärische Einheiten weitergeleitet werden können. Ein Besatzungsmitglied kann über eine Bedienvorrichtung die Übertragung der Aufklärungsdaten an das Führungssystem initiieren. Die Daten können dann von der Aufklärungsvorrichtung in das Führungsinformationssystem übertragen werden. Alternativ ist es möglich die Daten der Aufklärungsvorrichtung in einem Netzwerkknoten zwischenzuspeichern und dann an das Führungsinformationssystem zu übertragen.

Eine weitere vorteilhafte Ausgestaltung des Fahrzeugs sieht vor, dass die Aufklärungsdaten über das Netzwerk zu der Waffe übertragbar sind, so dass das Richten der Waffe auf Grundlage der Aufklärungsdaten erfolgen kann. Weiter kann vorgesehen sein, dass Führungsdaten aus dem Führungsinformationssystem zu der Waffe übertragen werden können, so dass das richten der Waffe auf Grundlage der Führungsdaten erfolgen kann. Hierdurch kann die Umsetzung von militärischen Befehlen durch die Besatzungsmitglieder des Fahrzeugs unterstützt werden.

Im militärischen Anwendungsbereich ist es oftmals erforderlich, Fahrzeuge um- oder nachzurüsten, um die Fahrzeuge auf missionsspezifische Gegebenheiten oder wechselnde Bedrohungen anzupassen. Vor diesem Hintergrund hat es sich als vorteilhaft erwiesen, wenn Subsysteme an das Netzwerk anschließbar sind, die über mehrere Bedienvorrichtungen bedienbar sind. Neben der Waffe und dem Führungsinformationssystem können weitere Subsysteme in das Fahrzeug eingerüstet werden und dann über dieselbe Bedienvorrichtung bedient werden. Die Anbindung der Subsysteme kann über einen Netzwerkknoten oder einen Switch erfolgen. Bei einem Fahrzeug mit mehreren Arbeitsplätzen kann die Bedienung der Subsysteme bevorzugt an allen Bedienvorrichtungen erfolgen.

Als Subsysteme können neben den bereits genannten Subsystemen wie Effektoren und Sensoren, bevorzugt folgende Systeme zum Einsatz kommen:
- Fahrzeug-Sensor zur Erfassung von Fahrzeugdaten,
- Prüfsystem,
- Navigationssystem,
- Störsender,
- Datenbank, und/oder
- Schützendetektionsanlage.

Diese Subsysteme, die rüstsatzspezifisch für den jeweiligen Einsatzzweck einrüstbar sind, sollen im Folgenden beschrieben werden:
Gemäß einer vorteilhaften Ausgestaltung weist das Fahrzeug einen Fahrzeug-Sensor zur Erfassung von Fahrzeugdaten auf, welcher mit dem Netzwerk, insbesondere über einen Netzwerkknoten, verbunden ist. Der Netzwerkknoten nimmt die Adaption, beispielsweise eine Protokollwandlung, des Sensors vor und übergibt die Sensordaten an das Netzwerk. Über den Fahrzeug-Sensor können Statusinformationen und/oder Belastungsdaten des Fahrzeugs erfasst werden und, insbesondere über den Netzwerkknoten, auf der Anzeigevorrichtung angezeigt werden. Es ist keine separate Anzeigevorrichtung erforderlich. Die über den Fahrzeug-Sensor erfassten Daten können abgespeichert und ausgewertet werden.

Ferner ist es vorteilhaft, wenn das Fahrzeug ein Prüfsystem aufweist, welches mit dem Netzwerk verbunden ist. Über das Prüfsystem können Fehlerdaten des Fahrzeugs oder von Anbauteilen des Fahrzeugs ermittelt werden. Die Fehlerdaten können auf der Anzeigevorrichtung angezeigt werden, so dass es nicht erforderlich ist eine separate Anzeigevorrichtung für das Prüfsystem vorzuhalten. Die Fehlerdaten können abgespeichert und ausgewertet werden.

Vorteilhaft ist es auch, wenn das Fahrzeug ein Navigationssystem aufweist, welches mit dem Netzwerk verbunden ist. Mit dem Navigationssystem kann die Besatzung des Fahrzeugs autark navigieren, beispielsweise wenn das Führungsinformationssystem gestört oder nicht verfügbar ist. Über das Navigationssystem können Navigationsdaten in der Anzeigevorrichtung dargestellt werden. Die Navigationsdaten können abgespeichert und ausgewertet werden. Das Navigationssystem kann über die Bedienvorrichtung bedienbar sein. Es ist daher nicht erforderlich, eine separate Anzeige- und/oder Bedienvorrichtung für das Navigationssystem vorzusehen.

Bevorzugt weist das Fahrzeug einen Störsender auf, welcher mit dem Netzwerk verbunden ist. Mittels des Störsenders kann die Kommunikation feindlicher Einheiten gestört und/oder die Auslösung ferngesteuerter Sprengfallen unterbunden werden. Der Störsender kann über die Bedienvorrichtung bedienbar sein, so dass keine weiteren Bedienelemente erforderlich sind.

Vorteilhafterweise weist das Fahrzeug eine Datenbank auf, die mit dem Netzwerk verbunden ist. In der Datenbank können Dokumente bereitgestellt werden, beispielsweise technische Dokumentation zur Bedienung und/oder Wartung des Fahrzeugs. Die Dokumente können auf der Anzeigevorrichtung anzeigbar sein. Ferner kann die Datenbank über die Bedienvorrichtung bedienbar sein.

Gemäß einer weiteren vorteilhaften Ausgestaltung ist in dem Fahrzeug eine Schützendetektionsanlage vorgesehen, welche mit dem Netzwerk verbunden ist. Über die Schützendetektionsanlage können feindliche Stellungen und/oder die Höhe, der Winkel, die Entfernung und/oder das Kaliber feindlichen Beschusses erkannt werden. Die Lagedaten der erkannten Stellungen können über das Netzwerk übertragen werden, insbesondere an das Führungsinformationssystem und/oder die Waffe. Die Bedienung der Schützendetektionsanlage kann über die Bedienvorrichtung erfolgen.

Durch das modular skalierbare Architektur des IT-Systems können Subsysteme, die bislang nicht miteinander zusammenarbeiten konnten, miteinander vernetzt werden, um ein querschnittliches, intuitives Bedien- und Anzeigekonzept in militärischen Fahrzeugen zu erhalten. Es können beliebig viele Arbeitsplätze eines Fahrzeugs miteinander vernetzt werden. Ferner kann das Netzwerk über Funkeinheiten auch außerhalb des Fahrzeugs erweitert werden, so dass Netzwerknoten außerhalb des Fahrzeugs, z.B. ein Arbeitsplatz in einem anderen Fahrzeug oder einem Kommandostand, anschließbar sind.

Im Hinblick auf die Ausbildung eines Besatzungsmitglieds hat es sich ferner als vorteilhaft erwiesen, wenn die Bedienung der Waffe und/oder des Führungssystems simulierbar ist. Das Besatzungsmitglied kann die Bedienvorrichtung seines Arbeitsplatzes betätigen und dabei eine Simulationssoftware bedienen, welche die Bedienung der Waffe und/oder des Führungsinformationssystems simuliert. Hierdurch kann das Besatzungsmitglied in realem Umfeld, innerhalb des militärischen Fahrzeugs ausgebildet werden. Es ist nicht erforderlich, eine separate Simulationseinrichtung zur Ausbildung des Besatzungsmitglieds vorzuhalten.

Die eingangs genannte Aufgabe wird ferner durch ein IT-System für das militärische Fahrzeug **gelöst,** welches eine fernbedienbare Waffe und ein Führungsinformationssystem zum Empfangen und/oder Senden militärischer Führungsdaten derart miteinander verbindet, dass das Führungsinformationssystems und die Waffe mit einer gemeinsamen Bedienvorrichtung bedienbar sind.

Im Übrigen kann das IT-System (kurz für "Informationstechnisches System") die bereits im Zusammenhang mit dem Fahrzeug beschriebenen Merkmale und Vorteile aufweisen. Das IT-System umfasst insbesondere das Netzwerk, die Netzwerkknoten und/oder mindestens einen Bus sowie ggf. mindestens einen Switch. An das IT-System lassen sich die beschriebenen Elemente anschließen.

Bei dem IT-System kann es sich um ein integrierendes System handeln, bei dem wie beschrieben die Funktionalität von Subsystemen integrierbar ist.

Nachfolgend sollen anhand der in den Figuren dargestellten Ausführungsbeispiele weitere Einzelheiten und Vorteile der Erfindung erläutert werden. Hierin zeigt:
- Fig. 1: ein militärisches Fahrzeug gemäß einer ersten Ausgestaltung in schematischer Darstellung;
- Fig. 2: ein Blockdiagramm des Fahrzeugs aus Fig. 1;
- Fig. 3: ein militärisches Fahrzeug gemäß einer zweiten Ausgestaltung in schematischer Darstellung; und
- Fig. 4: ein Blockdiagramm des Fahrzeugs aus Fig. 3.

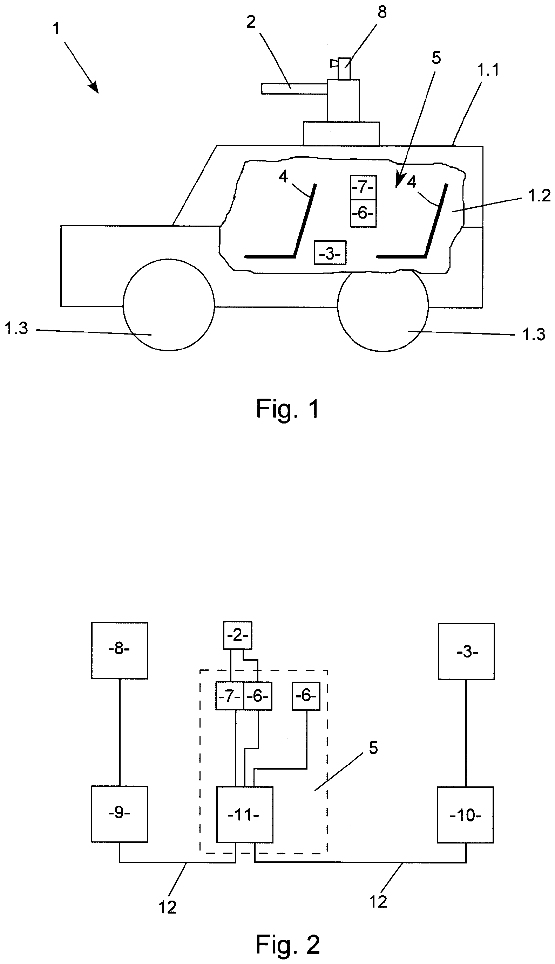

In Fig. 1 ist ein militärisches Fahrzeug 1 dargestellt, welches als Landfahrzeug ausgebildet ist. Auch wenn das dargestellte Fahrzeug 1 Räder 1.3 aufweist, lässt sich die Erfindung in gleicher Weise auch bei einem Fahrzeug mit Antriebsketten anwenden.

Zum Schutz gegen feindliche Einwirkungen weist das Fahrzeug 1 eine gepanzerte Außenkontur 1.1 auf. An der Außenkontur 1.1 ist eine fernbedienbare Waffe 2 angeordnet, die über geeignete fernbedienbare Antriebe in Azimut und Elevation richtbar ist. Die Waffe 2 ist Teil einer fernbedienbaren Waffenstation, welche neben der Waffe 2 zusätzlich eine als Kamera 8 ausgebildete Aufklärungsvorrichtung aufweist. Die Kamera 8 ist derart an der Waffe 2 angeordnet, dass sie zusammen mit der Waffe 2 in Azimut und Elevation gerichtet werden kann, so dass die Kamera 8 stets in Schussrichtung der Waffe 2 gerichtet ist.

Die Bedienung der Waffe 2 kann aus dem geschützten Innenraum 1.2 des militärischen Fahrzeugs 1 erfolgen. Hierzu ist im Innenraum 1.2 ein Arbeitsplatz 5 vorgesehen, von welchem aus die Waffe 2 durch ein Besatzungsmitglied des Fahrzeugs 1, beispielsweise einen Schützen, fernbedient werden kann. Der Arbeitsplatz 5 weist einen Sitz 4 auf, auf welchem das Besatzungsmitglied zur Arbeit an dem Arbeitsplatz 5 Platz nehmen kann. Ferner weist der Arbeitsplatz 5 eine Bedienvorrichtung 6 zur Bedienung der Waffe 2 auf. Die Bedienvorrichtung 6 weist mehrere Bedienelemente auf, die als Knopf, Taster, Drehschalter, Kippschalter, Schieberegler, Joystick, Maus, 3D-Maus, Trackball oder als berührungsempfindliche Fläche ausgestaltet sein können. Über die Bedienvorrichtung 6 kann die Waffe z. B. in Azimut und Elevation gerichtet werden. Ferner ist es über die Bedienvorrichtung möglich, weitere Einstellungen an der Waffe 2 vorzunehmen sowie die Waffe 2 auszulösen.

Im Innenraum 1.2 ist ferner ein Sitzplatz für einen Fahrer mit einem Sitz 4 vorgesehen. Dieser Sitzplatz ist nicht als Arbeitsplatz 5 ausgebildet, so dass die Waffe 2 und das Führungsinformationssystem 3 von diesem Sitzplatz aus nicht bedient werden können.

Um militärische Führungsdaten empfangen und versenden zu können, weist das Fahrzeug 1 darüber hinaus ein Führungsinformationssystem 3 auf. Das Führungsinformationssystem 3 ist über eine drahtlose Kommunikationsverbindung mit anderen Fahrzeugen 1, Einheiten oder Leitstellen verbunden. Über das Führungsinformationssystem 3 können Führungsdaten, beispielsweise Einsatzpläne, Befehle, Aufklärungskoordinaten und Lagedaten ausgetauscht werden. Um die Anfälligkeit für Bedienfehler zu reduzieren, ist die Bedienvorrichtung 6 derart ausgebildet, dass sowohl die Waffe 2 als auch das Führungsinformationssystem 3 über die gemeinsame Bedienvorrichtung 6 bedient werden können. Die gemeinsame Bedienvorrichtung 6 bildet eine zentrale Bedienoberfläche zur Bedienung der Waffe 2 und des Führungsinformationssystems 3 sowie weiterer Subsysteme 8, 14-19 des Fahrzeugs 1. Das Besatzungsmitglied kann daher über die Bedienvorrichtung 6 die Waffe 2 richten und auslösen sowie Eingaben zum Senden und/oder Empfangen von Führungsdaten des Führungsinformationssystems 3 tätigen. Die Betätigung der Waffe 2 und des Führungsinformationssystems 3 kann parallel oder sequentiell erfolgen.

Zudem kann die Kamera 8 über die gemeinsame Bedienvorrichtung 6 bedient werden. Beispielsweise kann die Vergrößerung der Kamera 8 über die Bedienvorrichtung 6 eingestellt werden. Auch das Richten der Kamera 8 kann über die Bedienvorrichtung 6 erfolgen. Bei dem Ausführungsbeispiel ist die Kamera 8 zusammen mit der Waffe 2 richtbar, so dass die Ausrichtung der Kamera 8 über das Richten der Waffe 2 erfolgen kann. Alternativ kann die Kamera 8 unabhängig von der Waffe 2 richtbar sein.

Neben der Bedienvorrichtung 6 weist der Arbeitsplatz 5 eine Anzeigevorrichtung 7 auf, auf welcher die Führungsdaten des Führungsinformationssystems 3 angezeigt werden können. Die Bedienvorrichtung 6 und Anzeigevorrichtung 7 sind nach Art eines kombinierten Bedien- und Anzeigegeräts in einem gemeinsamen Gehäuse angeordnet. In der Anzeigevorrichtung 7 können zusätzlich Statusinformationen der Waffe 2, wie beispielsweise die momentane Ausrichtung in Azimut und Elevation, dargestellt werden. Ferner ist es wahlweise möglich, durch die Kamera 8 aufgenommene Bilddaten auf der Anzeigevorrichtung 7 anzuzeigen. Die Auswahl und Steuerung der auf der Anzeigevorrichtung 7 dargestellten Daten von Führungsinformationssystem 3, Waffe 2 und Kamera 8 erfolgt dabei durch Betätigung der Bedienvorrichtung 6. Somit kann das an dem Arbeitsplatz 5 arbeitende Besatzungsmitglied die Waffe 2, das Führungsinformationssystem 3 und die Kamera 8 wahlweise abwechselnd oder simultan bedienen und Daten der Waffe 2, der Kamera 8 und des Führungsinformationssystems 3 auf der Anzeigevorrichtung 7 ablesen. Das Besatzungsmitglied kann somit sowohl solche Tätigkeiten durchführen, die üblicherweise einem Schützen zugewiesen sind als auch solche Tätigkeiten, die üblicherweise ein Kommandant eines Fahrzeugs 1 ausübt. Bevorzugt ist die Anzeigevorrichtung 7 derart ausgestaltet, dass relevante Führungsdaten, wie beispielsweise Befehle mit hoher Priorität, aktiv in die Anzeigevorrichtung 7 eingeblendet werden.

In Fig. 2 ist ein Blockdiagramm des militärischen Fahrzeugs 1 aus Fig. 1 dargestellt. Wie dieser Darstellung zu entnehmen ist, weist der Arbeitsplatz 5 neben der vorstehend erwähnten Anzeigevorrichtung 7, die z. B. als Flachbildschirm, LCD- oder LED-Anzeige ausgebildet sein kann, und der ebenfalls vorstehend genannten Bedienvorrichtung 6, die beispielsweise mehrere Bedienknöpfe aufweisen kann, eine weitere Bedienvorrichtung 6 auf. Diese kann insbesondere als Trackball, Maus oder Tastatur ausgebildet sein.

Die Bedienvorrichtungen 6 und die Anzeigevorrichtung 7 des Arbeitsplatzes 5 sind über geeignete Verbindungen, wie beispielsweise eine USB-, VGA-, HDMI- oder DVI-Schnittstelle mit einem Computer 11 verbunden. Ferner ist die Waffe 2 direkt mit der Bedienvorrichtung 6 und der Anzeigevorrichtung 7 des kombinierten Bedien- und Anzeigegeräts verbunden, so dass Steuersignale zur Steuerung der Waffe 2 direkt von der Bedienvorrichtung 6 zu der Waffe 2 übertragen werden können, ohne dass ein Umweg über den Computer 11 erforderlich wäre.

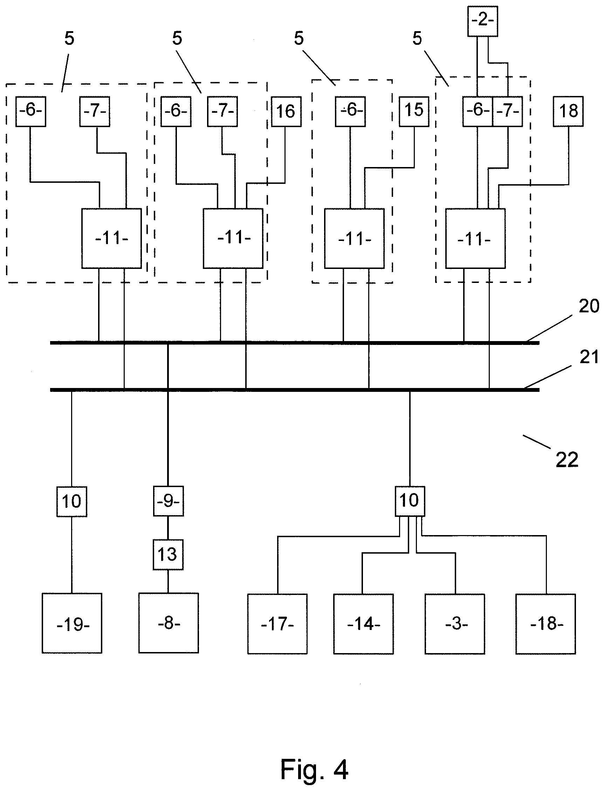

Das Führungsinformationssystem 3 ist über eine Ethernet-Verbindung 12 mit dem Computer 11 verbunden. Zur Anbindung des Führungsinformationssystems 3 an die Ethernet-Verbindung 12 ist zwischen dem Führungsinformationssystem 3 und der Ethernet-Verbindung 12 ein Datenswitch 10 angeordnet. Über diesen Datenswitch 10 können (analog zu Fig. 4) optional weitere Subsysteme 14-19 des Fahrzeugs 1 an den Computer 11 angebunden werden, so dass diese über die Bedienvorrichtungen 6 bedient werden können.

Über eine weitere Ethernet-Verbindung 12 ist die Kamera 8 an den Computer 11 angebunden. Zwischen der Kamera 8 und dem Computer 11 ist hierzu ein Videoswitch 9 angeordnet, über welchen die Bilddaten der Kamera 8 dem Computer 11 bereitgestellt werden, so dass diese auf der mit dem Computer 11 verbundenen Anzeigevorrichtung 7 angezeigt werden können.

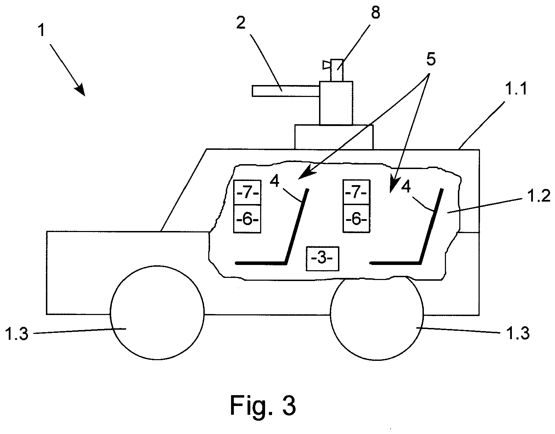

In Fig. 3 und 4 ist ein zweites Ausführungsbeispiel der Erfindung dargestellt. Das militärische Fahrzeug 1 weist im Wesentlichen dieselben Komponenten auf, wie sie vorstehend bereits im Zusammenhang mit dem Fahrzeug 1 des ersten Ausführungsbeispiels beschrieben wurden. Darüber hinaus weist das Fahrzeug 1 mehrere Arbeitsplätze 5 auf, von denen in Fig. 3 lediglich zwei dargestellt sind. Neben den Arbeitsplätzen 5 kann das Fahrzeug 1 weitere Sitze 4 und/oder Stehplätze aufweisen, die nicht als erfindungsgemäße Arbeitsplätze 5 ausgebildet sind.

Bei dem Fahrzeug 1 gemäß Fig. 3 weist jeder Arbeitsplatz 5 eine Bedienvorrichtung auf, über welche sowohl die Waffe 2 als auch das Führungsinformationssystem 3 bedient werden kann, so dass mehrere Besatzungsmitglieder, beispielsweise der Schütze und der Kommandant des Fahrzeugs 1, die Waffe 2 und das Führungsinformationssystem 3 von ihrem Arbeitsplatz 5 aus bedienen können. Ferner weisen mehrere Arbeitsplätze 5 eine Anzeigevorrichtung 7 auf, auf welcher Daten der Waffe 2, der Kamera 8 und des Führungsinformationssystems 3 angezeigt werden können, so dass die an diesen Arbeitsplätzen 5 arbeitenden Besatzungsmitglieder dieselbe Informationen zur Verfügung gestellt werden können. Beispielsweise kann der Kommandant des Fahrzeugs 1 Einblick in die Tätigkeiten des Schützen nehmen und umgekehrt der Schütze Informationen aus dem Führungsinformationssystem 3 einsehen. Einem Informationsdefizit und einer Ungleichverteilung der Informationen zwischen den Besatzungsmitgliedern wird somit entgegengewirkt.

Die Fig. 4 zeigt eine Übersicht des netzwerkbasierten, modular erweiterbaren IT-Systems des militärischen Fahrzeugs 1.

Wie der Fig. 4 zu entnehmen, weist das Fahrzeug 1 hierzu ein Netzwerk 22 auf, welches als Ethernet-Netzwerk ausgebildet ist. Das Netzwerk 22 dient zur Vernetzung der angeschlossenen Elemente sowie der Verteilung der Daten der angeschlossenen Elemente. Das Netzwerk 22 weist mehrere Computer als Netzwerkknoten 11 auf, die über Ethernet-Verbindungen miteinander verbunden sind. Die Ethernet-Verbindungen sind als Datenbus 21 und als Videobus 20 ausgestaltet. Der Datenbus 21 dient der Übertragung von Daten, insbesondere von Führungsdaten des Führungsinformationssystems 3. Über den Datenbus 21 können ferner Steuerdaten der Waffe 2 übertragen werden. Über den Videobus 20 werden Bilddaten, beispielsweise solche der Kamera 8, übertragen. Die Busse 20, 21 sind getrennt ausgeführt, um eine gegenseitige Beeinflussung der Bilddaten und der Führungsdaten zu verhindern.

In einer Abwandlung dieses Ausführungsbeispiels kann das Netzwerk einen Bus zur gemeinsamen Übertragung von Führungsdaten und Bilddaten aufweisen. Um bei einem solchen Netzwerk die gegenseitige Beeinflussung der Datenübertragung von Führungsdaten, Steuerdaten und Bilddaten zu verringern, kann ein Übertragungsprotokoll verwendet werden, welches eine Priorisierung der Daten ermöglicht. Durch ein solches Protokoll können Führungsdaten und Steuerdaten mit einer gegenüber den Bilddaten erhöhten Priorität gesendet werden, so dass die Beeinträchtigung der Übertragung der Steuerdaten und Führungsdaten durch die Bilddaten verringert wird.

Wie ferner in Fig. 4 ersichtlich, ist jedem Arbeitsplatz 5 des Fahrzeugs jeweils ein Netzwerkknoten 11 zugewiesen. Alternativ können mehrere Netzwerkknoten 11 in einem gemeinsamen Gehäuse angeordnet sein, um eine kompakte Ausgestaltung zu ermöglichen. Insgesamt weist das Fahrzeug 1 vier Arbeitsplätze 5 auf, an denen beispielsweise der Kommandant des Fahrzeugs, ein Schütze sowie zwei weitere Besatzungsmitglieder arbeiten können.

An allen Arbeitsplätzen 5 ist jeweils eine Bedienvorrichtung 6 vorgesehen, über welche die Waffe 2 und die Kamera 8 sowie das Führungsinformationssystem 3 bedient werden können. Aufgrund der Busstruktur des Netzwerks 22 können beliebig viele Subsysteme 15-19 an das Netzwerk 22 angebunden und über die Bedienvorrichtungen 6 bedient werden. Die Anbindung der Subsysteme 14-19 kann wahlweise über einen Switch 9, 10 oder einen Netzwerkknoten 11 erfolgen. Es ist daher nicht erforderlich, auf die jeweiligen Subsysteme 14-19 angepasste weitere Bedien- oder Anzeigevorrichtungen in das Fahrzeug 1 einzubauen.

In der Darstellung gemäß Fig. 4 ist ein Störsender 16 zur Abwehr ferngesteuerter Sprengfallen über einen Netzwerkknoten 11 mit dem Netzwerk verbunden. Ferner weist das Fahrzeug 1 ein Prüfsystem 15 zur Erfassung von Fehlerdaten des Fahrzeugs 1 auf, welches ebenfalls über einen Netzwerkknoten 11 mit dem Netzwerk verbunden ist. Als weiteres Subsystem ist eine Schützendetektionsanlage 18 über einen Netzwerkknoten 11 mit dem Netzwerk verbunden, durch welche in Reaktion auf feindlichen Beschuss Aufklärungsdaten, z. B. Lagekoordinaten feindlicher Stellungen, bereitgestellt werden können und in das Netzwerk eingespeist werden können. Die Verbindung der Subsysteme 15, 16, 18 mit den jeweiligen Netzwerkknoten 11 kann z. B. über eine CAN-Bus-Verbindung oder eine RS232-Schnittstelle erfolgen.

Eine Kamera 8 ist über einen Videoswitch 9 mit dem Netzwerk 22 verbunden. Zwischen dem Videoswitch 9 und der Kamera 8 ist ein Konverter 13 zur Konversion der Bilddaten in ein netzwerkfähiges Format angeordnet. Der Konverter 13 kann auch in dem Netzwerkknoten 11 integriert sein. Ferner können Konverter 13, die einen Netzwerkanschluss haben, auch direkt an den Videobus 20 anschließbar sein. Der konverter kann hierbei dann direkt ethernetfähige Daten liefern. Der Videoswitch 9 ist insbesondere dann vorteilhaft, wenn mehrere Videoquellen über mehrere Konverter 13 an den Videobus 20 angebunden werden sollen.

Ferner sind zwei Datenswitches 10 an den Datenbus 20 angebunden. Über einen ersten Datenswitch 10 ist eine Datenbank 19 angeschlossen, in welcher z. B. Handbücher und Montageinformationen zu dem Fahrzeug 1 abgelegt sind. Diese können auf einer beliebigen mit dem Netzwerk 22 verbundenen Anzeigevorrichtung 7 angezeigt werden. Ein zweiter Datenswitch 10 verbindet das Führungsinformationssystem 3 sowie weitere Subsysteme 14, 17, 18 mit dem Netzwerk 22. Bei diesen Subsystemen 14, 17, 18 handelt es sich um einen als Luftdrucksensor ausgebildeten Fahrzeug-Sensor 14, ein Navigationssystem 17 sowie eine weitere Schützendetektionsanlage 18. Die Anbindung der Subsysteme 14, 17, 18 an den Switch 10 erfolgt über einer Ethernet-Verbindung.

Das Netzwerk des Fahrzeugs 1 ist beliebig durch weitere Subsysteme erweiterbar. Beispielsweise kann ein lasergestützter Entfernungsmesser, ein Nachtsichtgerät oder weitere Kameras an das Netzwerk des Fahrzeugs 1 angeschlossen und über die Bedienvorrichtungen 7 bedient werden.

Mit Hilfe der Aufklärungsvorrichtungen 8, 18 können militärisch relevante Daten über die Koordinaten feindlicher Stellungen gewonnen werden. Da sowohl die Aufklärungsvorrichtungen 8, 18 als auch das Führungsinformationssystem 3 an das Netzwerk 22 des Fahrzeugs 1 angebunden ist, können die durch die Aufklärungsvorrichtungen 8, 18 gewonnenen Aufklärungsdaten über das Netzwerk zu dem Führungsinformationssystem 3 übertragen werden. Die Steuerung des Übertragungsvorgangs erfolgt dabei durch eine Bedienvorrichtung 7.

Ferner können in dem Führungsinformationssystem 3 vorliegende Führungsdaten, die z. B. von anderen Fahrzeugen 1 oder anderen Einheiten gewonnen wurden, über das Netzwerk 22 an die Waffe 2 übermittelt werden, so dass das Richten der Waffe 2 auf Grundlage der übermittelten Führungsdaten erfolgen kann. Die Aufklärungsdaten und/oder Führungsdaten können dabei auf einer Anzeigevorrichtung 7 eines Arbeitsplatzes 5 angezeigt und ggf. mit Hilfe einer Bedienvorrichtung 6 bearbeitet werden. Alternativ kann die Zielposition kann auf Grundlage solcher Daten berechnet werden, die durch die Aufklärungsvorrichtungen 8, 18 ermittelt und über das Netzwerk 22 übertragen werden.

Die angeschlossenen Elemente werden in den Netzwerknoten für das Netzwerk angepasst. In jedem Netzwerkknoten 11 können verschiedene Betriebssysteme virtualisiert werden. Es kann eine Kombination aus "real-time" und "non real-time" Applikationen realisiert werden. Die Softwarearchitektur ist als Schichtenarchitektur aufgebaut. Es wird eine 3-Tier-Architektur verwendet, welches aus Präsentationsschicht (User Interface), Business Logiken und dem Backbone besteht. Hierbei werden die einzurüstenden, meist proprietär ausgelegen Subsysteme intelligent zusammengeführt.

Das Backbone (Middleware) stellt eine Ebene in einem komplexen Softwaresystem dar, die als "Dienstleister" (Data Distribution Service) anderen, ansonsten entkoppelten Softwarekomponenten den Datenaustausch ermöglicht. Die Anwendungs- oder Geschäftsschicht (Business Logik) ist für die Bearbeitung der Daten verantwortlich. Diese Schicht beinhaltet Programme und Softwarekomponenten die Daten und Informationen aus der untersten Schicht verarbeiten und für deren Darstellung in der Präsentationsschicht (user interface) vorbereiten.

Diese Architektur bleibt im verteilten IT-System erhalten. Das verteilte IT-System ermöglicht die Kommunikation zwischen beteiligten Netzwerkknoten 11 auf Applikationsebene mittels des Consumer-Producers-Konzepts via DDS.

Durch das Partitionierungskonzept wird ferner die Trennung von user interface und sicherheitskritischen Anwendungen ermöglicht. Somit ist die Nutzbarkeit der Softwarearchitektur im sicherheitskritischen Umfeld gegeben.

Bei dem Fahrzeug 1 ist die Bedienung der Waffe 2 und/oder des Führungssystems 3 ferner wahlweise simulierbar, so dass die Ausbildung einzelner Besatzungsmitglieder parallel zu dem regulären Betrieb des Fahrzeugs 1 erfolgen kann. Beispielsweise kann ein Arbeitsplatz 5 als Ausbildungsplatz konfiguriert werden, so dass ein Benutzer des Ausbildungsplatzes eine simulierte Waffe und ein simuliertes Führungsinformationssystem bedienen kann, während von den übrigen Arbeitsplätzen 5 aus die reale Waffe 2 und das reale Führungsinformationssystem 3 bedient werden kann. An dem Ausbildungsplatz können unterschiedliche Übungsszenarien eingespielt werden, um verschiedene Ausbildungsinhalte bereitzustellen.

Die vorstehend beschriebenen Fahrzeuge 1 weisen jeweils eine fernbedienbare Waffe 2 und ein Führungsinformationssystem 3 zum Empfangen und/oder Senden militärischer Führungsdaten auf, welche über eine gemeinsame Bedienvorrichtung 6 eines Arbeitsplatzes 5 des Fahrzeugs 1 bedienbar sind. Hierdurch kann die Anfälligkeit für Bedienfehler erheblich verringert werden.

Das Fahrzeug kann mehrere Arbeitsplätze, insbesondere für einen Kommandanten und einen Schützen aufweisen, wobei die Arbeitsplätze 5 jeweils eine Bedienvorrichtung 6 aufweisen, über welche sowohl die Waffe 2 als auch das Führungsinformationssystem 3 bedienbar sind, und wobei die Bedienvorrichtungen 6, die Waffe 2 und das Führungsinformationssystem 3 mit mindestens einem Bus 20, 21 eines Netzwerks 22 zur Verteilung der Daten der Waffe 2 und des Führungsinformationssystems 3 verbunden sind.

Über das Netzwerk können die Waffe, 2, das Führungsinformationssystem 3, die Bedienvorrichtungen 6 sowie die Subsysteme miteinander vernetzt werden, so dass die verfügbaren Informationen und Daten im Netzwerk 22 gleichzeitig an alle Netzwerkknoten 11 verteilbar sind, so dass diese dort für die Benutzer und die angeschlossenen Elemente gleichzeitig zur Verfügung stehen.

Als Eingangsgrößen dienen die verfügbaren Informationen aller in das Fahrzeugsystem integrierten Sensoren, die zusammen mit potentiellen Handlungsmöglichkeiten der zu Verfügung stehenden Effektoren auf einem Anzeigegerät sicht- und steuerbar gemacht werden.

### Bezugszeichen:

- 1: Fahrzeug
- 1.1: Außenkontur
- 1.2: Innenraum
- 1.3: Rad
- 2: Waffe
- 3: Führungsinformationssystem
- 4: Sitz
- 5: Arbeitsplatz
- 6: Bedienvorrichtung
- 7: Anzeigevorrichtung
- 8: Kamera
- 9: Videoswitch
- 10: Datenswitch
- 11: Netzwerkknoten
- 12: Ethernet-Verbindung
- 13: Konverter
- 14: Fahrzeug-Sensor
- 15: Prüfsystem
- 16: Störsender
- 17: Navigationssystem
- 18: Schützendetektionsanlage
- 19: Datenbank
- 20: Videobus
- 21: Datenbus
- 22: Netzwerk

## Patentansprüche

1. Militärisches Fahrzeug mit einer fernbedienbaren Waffe (2) und mit einem Führungsinformationssystem (3) zum Empfangen und/oder Senden militärischer Führungsdaten,
**gekennzeichnet durch**
mehrere Arbeitsplätze (5), insbesondere für einen Kommandanten und einen Schützen, wobei jeder Arbeitsplatz (5) eine Bedienvorrichtung (6) aufweist, über welche sowohl die Waffe (2) als auch das Führungsinformationssystem (3) bedienbar ist und wobei die Bedienvorrichtungen (6) sowie die Waffe (2) und das Führungsinformationssystem (3) über ein Netzwerk (22) miteinander verbunden sind, welches mehrere Netzwerkknoten (11) aufweist.

2. Militärisches Fahrzeug nach Anspruch 1, **dadurch gekennzeichnet, dass** jeder Bedienvorrichtung (6) eine Anzeigevorrichtung (7) zugeordnet ist, wobei auf der Anzeigevorrichtung (7) Daten des Führungsinformationssystems (3) und der Waffe (2) anzeigbar sind.

3. Militärisches Fahrzeug nach einem der vorhergehenden Ansprüche, **gekennzeichnet durch** eine Aufklärungsvorrichtung (8), insbesondere eine Kamera, zur Erfassung von Aufklärungsdaten, insbesondere Bilddaten, welche auf der Anzeigevorrichtung (7) darstellbar sind.

4. Militärisches Fahrzeug nach einem der vorhergehenden Ansprüche,
**dadurch gekennzeichnet, dass** ein Netzwerkknoten (11) jeweils mit einer Anzeigevorrichtung (7) und/oder einer Bedienvorrichtung (6) eines Arbeitsplatzes (5) verbunden ist.

5. Militärisches Fahrzeug nach einem der vorhergehenden Ansprüche,
**dadurch gekennzeichnet, dass** das Netzwerk (22) einen Bus (20, 21) zur Verteilung von Daten, insbesondere von Führungsdaten oder Bilddaten, aufweist, an dem die Netzwerkknoten (11) angeschlossen sind.

6. Militärisches Fahrzeug nach einem der vorhergehenden Ansprüche,
**dadurch gekennzeichnet, dass** das Netzwerk (22) mehrere Busse (20, 21) zur getrennten Verteilung verschiedener Daten aufweist, an denen die Netzwerkknoten (11) angeschlossen sind.

7. Militärisches Fahrzeug nach Anspruch 6, **dadurch gekennzeichnet, dass** Führungsdaten und Bilddaten über getrennte Busse (20, 21) übertragbar sind.

8. Militärisches Fahrzeug nach einem der vorhergehenden Ansprüche,
**dadurch gekennzeichnet, dass** das Netzwerk (22) einen Switch (10) zur Anbindung des Führungsinformationssystems (3) und/oder einer Aufklärungsvorrichtung (8), insbesondere einer Kamera, aufweist.

9. Militärisches Fahrzeug nach einem der vorhergehenden Ansprüche,
**dadurch gekennzeichnet, dass** Aufklärungsdaten über das Netzwerk (22) in das Führungsinformationssystem (3) und/oder zu der Waffe (2) übertragbar sind.

10. Militärisches Fahrzeug nach einem der vorhergehenden Ansprüche,
**dadurch gekennzeichnet, dass** Subsysteme (14-19), insbesondere über einen Switch (9, 10), an das Netzwerk (22) anschließbar sind, die über mehrere Bedienvorrichtungen (6), insbesondere über alle Bedienvorrichtungen (6), bedienbar sind.

11. Militärisches Fahrzeug nach einem der vorhergehenden Ansprüche, **gekennzeichnet durch** einen Fahrzeug-Sensor (14), ein Prüfsystem (15), ein Navigationssystem (17), einen Störsender (18), eine Datenbank (19), und/oder eine Schützendetektionsanlage (16).

12. Militärisches Fahrzeug nach einem der vorhergehenden Ansprüche,
**dadurch gekennzeichnet, dass** die Bedienung der Waffe (2) und/oder des Führungssystems (3) simulierbar ist.

13. IT-System für ein militärisches Fahrzeug (1), insbesondere nach einem der vorhergehenden Ansprüche, **dadurch gekennzeichnet, dass** es eine fernbedienbare Waffe (2) und ein Führungsinformationssystem (3) zum Empfangen und/oder Senden militärischer Führungsdaten derart miteinander verbindet, dass das Führungsinformationssystems (3) und die Waffe (2) von mehreren Arbeitsplätzen (5) aus bedienbar sind, wobei jeder Arbeitsplatz (5) eine Bedienvorrichtung (6) aufweist, über welche sowohl die Waffe (2) als auch das Führungsinformationssystem (3) bedienbar sind und wobei die Bedienvorrichtungen (6) sowie die Waffe (2) und das Führungsinformationssystem (3) über ein Netzwerk (22) miteinander verbunden sind, welches mehrere Netzwerkknoten (11) aufweist.

14. IT-System nach Anspruch 13, **gekennzeichnet durch** ein Netzwerk (22), mindestens einen Netzwerkknoten (11), insbesondere mehrere Netzwerkknoten (11), und/oder mindestens einen Bus (20, 21).

## Claims

1. Military vehicle having a remote-controlled weapon (2) and having a guidance information system (3) for receiving and/or transmitting military guidance data,
**characterized by**
a plurality of workstations (5), in particular for a commander and a shooter, wherein each workstation (5) has an operating apparatus (6) which can be used to operate both the weapon (2) and the guidance information system (3), and wherein the operating apparatuses (6) as well as the weapon (2) and the guidance information system (3) are connected to one another via a network (22) having a plurality of network nodes (11).

2. Military vehicle according to Claim 1, **characterized in that** a display apparatus (7) is assigned to each operating apparatus (6), wherein data from the guidance information system (3) and from the weapon (2) can be displayed on the display apparatus (7).

3. Military vehicle according to one of the preceding claims, **characterized by** a reconnaissance apparatus (8), in particular a camera, for capturing reconnaissance data, in particular image data, which can be displayed on the display apparatus (7).

4. Military vehicle according to one of the preceding claims, **characterized in that** a network node (11) is respectively connected to a display apparatus (7) and/or to an operating apparatus (6) of a workstation (5).

5. Military vehicle according to one of the preceding claims, **characterized in that** the network (22) has a bus (20, 21) for distributing data, in particular guidance data or image data, to which bus the network nodes (11) are connected.

6. Military vehicle according to one of the preceding claims, **characterized in that** the network (22) has a plurality of buses (20, 21) for separately distributing various data, to which buses the network nodes (11) are connected.

7. Military vehicle according to Claim 6, **characterized in that** guidance data and image data can be transmitted via separate buses (20, 21).

8. Military vehicle according to one of the preceding claims, **characterized in that** the network (22) has a switch (10) for connecting the guidance information system (3) and/or a reconnaissance apparatus (8), in particular a camera.

9. Military vehicle according to one of the preceding claims, **characterized in that** reconnaissance data can be transmitted to the guidance information system (3) and/or to the weapon (2) via the network (22).

10. Military vehicle according to one of the preceding claims, **characterized in that** subsystems (14-19) can be connected to the network (22), in particular via a switch (9, 10), which subsystems can be operated using a plurality of operating apparatuses (6), in particular using all operating apparatuses (6).

11. Military vehicle according to one of the preceding claims, **characterized by** a vehicle sensor (14), a test system (15), a navigation system (17), a jammer (18), a database (19) and/or a shooter detection installation (16).

12. Military vehicle according to one of the preceding claims, **characterized in that** the operation of the weapon (2) and/or of the guidance system (3) can be simulated.

13. IT system for a military vehicle (1), in particular according to one of the preceding claims, **characterized in that** it connects a remote-controlled weapon (2) and a guidance information system (3) for receiving and/or transmitting military guidance data to one another in such a manner that the guidance information system (3) and the weapon (2) can be operated from a plurality of workstations (5), wherein each workstation (5) has an operating apparatus (6) which can be used to operate both the weapon (2) and the guidance information system (3), and wherein the operating apparatuses (6) as well as the weapon (2) and the guidance information system (3) are connected to one another via a network (22) having a plurality of network nodes (11).

14. IT system according to Claim 13, **characterized by** a network (22), at least one network node (11), in particular a plurality of network nodes (11), and/or at least one bus (20, 21).

## Revendications

1. Véhicule militaire comprenant une arme (2) commandable à distance et comprenant un système d'information de guidage (3) destiné à recevoir et/ou émettre des données de guidage militaires,
**caractérisé par**
plusieurs postes de travail (5), notamment pour un commandant et un tireur, chaque poste de travail (5) possédant un dispositif de commande (6) par le biais duquel peuvent être commandé à la fois l'arme (2) et le système d'information de guidage (3) et les dispositifs de commande (6) ainsi que l'arme (2) et le système d'information de guidage (3) étant reliés entre eux par le biais d'un réseau (22) qui possède plusieurs noeuds de réseau (11).

2. Véhicule militaire selon la revendication 1, **caractérisé en ce qu'**un dispositif d'affichage (7) est associé à chaque dispositif de commande (6), des données du système d'information de guidage (3) et de l'arme (2) pouvant être affichées sur le dispositif d'affichage (7).

3. Véhicule militaire selon l'une des revendications précédentes, **caractérisé par** un dispositif de reconnaissance (8), notamment une caméra, servant à acquérir des données de reconnaissance, notamment des données d'image, qui peuvent être représentées sur le dispositif d'affichage (7).

4. Véhicule militaire selon l'une des revendications précédentes, **caractérisé en ce qu'**un noeud de réseau (11) est respectivement relié à un dispositif d'affichage (7) et/ou un dispositif de commande (6) d'un poste de travail (5).

5. Véhicule militaire selon l'une des revendications précédentes, **caractérisé en ce que** le réseau (22) possède un bus (20, 21) servant à la distribution de données, notamment de données de guidage ou de données d'image, auquel sont raccordés les noeuds de réseau (11).

6. Véhicule militaire selon l'une des revendications précédentes, **caractérisé en ce que** le réseau (22) possède plusieurs bus (20, 21) servant à la distribution séparée de différentes données, auxquels sont raccordés les noeuds de réseau (11).

7. Véhicule militaire selon la revendication 6, **caractérisé en ce que** les données de guidage et les données d'image peuvent être transmises par le biais de bus (20, 21) différents.

8. Véhicule militaire selon l'une des revendications précédentes, **caractérisé en ce que** le réseau (22) possède un commutateur (10) destiné à la connexion du système d'information de guidage (3) et/ou d'un dispositif de reconnaissance (8), notamment d'une caméra.

9. Véhicule militaire selon l'une des revendications précédentes, **caractérisé en ce que** les données de reconnaissance peuvent être transmises dans le système d'information de guidage (3) et/ou à l'arme (2) par le biais du réseau (22).

10. Véhicule militaire selon l'une des revendications précédentes, **caractérisé en ce que** des sous-systèmes (14-19) peuvent être connectés au réseau (22), notamment par le biais d'un commutateur (9, 10), lesquels peuvent être commandés par le biais de plusieurs dispositifs de commande (6), notamment par le biais de tous les dispositifs de commande (6).

11. Véhicule militaire selon l'une des revendications précédentes, **caractérisé par** un capteur de véhicule (14), un système de contrôle (15), un système de navigation (17), un émetteur brouilleur (18), une base de données (19) et/ou un équipement de détection de tireur (16).

12. Véhicule militaire selon l'une des revendications précédentes, **caractérisé en ce que** la commande de l'arme (2) et/ou du système de guidage (3) peut être simulée.

13. Système informatique pour un véhicule militaire (1), notamment selon l'une des revendications précédentes, **caractérisé en ce qu'**il relie entre eux une arme (2) commandable à distance et un système d'information de guidage (3) destiné à recevoir et/ou émettre des données de guidage militaires de telle sorte que le système d'information de guidage (3) et l'arme (2) peuvent être commandés depuis plusieurs postes de travail (5), chaque poste de travail (5) possédant un dispositif de commande (6) par le biais duquel peuvent être commandé aussi bien l'arme (2) que le système d'information de guidage (3) et les dispositifs de commande (6) ainsi que l'arme (2) et le système d'information de guidage (3) sont reliés entre eux par le biais d'un réseau (22) qui possède plusieurs noeuds de réseau (11).

14. Système informatique selon la revendication 13, **caractérisé par** un réseau (22), au moins un noeud de réseau (11), notamment plusieurs noeuds de réseau (11), et/ou au moins un bus (20, 21).
